Europäisches Patentamt

European Patent Office

Office européen des brevets

(19)

(11) Publication number: **0 202 957**

**A1**

(12) # EUROPEAN PATENT APPLICATION

(21) Application number: **86304007.7**

(22) Date of filing: **27.05.86**

(51) Int. Cl.⁴: **A 01 D 34/66**

(30) Priority: **24.05.85 NZ 212190**

(43) Date of publication of application:
**26.11.86 Bulletin 86/48**

(84) Designated Contracting States:
**DE FR GB NL**

(71) Applicant: **Jennings, Neville William**
**Arahiwi Road**
**Mamaku Rotorua(NZ)**

(72) Inventor: **Jennings, Neville William**
**Arahiwi Road**
**Mamaku Rotorua(NZ)**

(74) Representative: **White, Martin David et al,**
**Marks & Clerk 57/60 Lincoln's Inn Fields**
**London WC2A 3LS(GB)**

(54) Detachable blades for drum mowers.

(57) Drum mowers have a skirt (33) with knives (40) which cut pasture close to the ground. Tall grasses interfere with hay and silage making by their excessive length.

Detachable drum mowers are disclosed enabling the mower to make a cut into pasture close to the ground with the mower blades themselves which are fixed to the mower skirt and a simultaneous cut further from the ground with the detachable blades. The assemblies consist of a blade (28) capable of being fixed to the mower drum (36) at a desired height and extending beyond the mower skirt (33) pairs and trios of blades are disclosed which are clamped to the drum each by a part (1) which partially encircles the drum.

FIG 3

EP 0 202 957 A1

## DETACHABLE BLADES FOR DRUM MOWERS

This invention concerns blade assemblies for drum mowers of the type used to make hay and silage and to cut certain crops which are subsequently dried on the ground.

Such mowers are designed to be tractor drawn and have a horizontal boom and a pair of vertically mounted, rotatable, side by side, drums. Each drum has a circular metal skirt extending from the lower edge of each drum and the underside of the skirt is protected by a convex metal saucer which rides close to the ground.

A set of four short knives about 50 mm long are bolted to the edge of the skirt so that they project beyond the skirt and cut the crop into which they advance. The drums counter rotate so as to feed the cuttings into the space between the skirts whereby the cuttings are laid in a swath as the tractor progresses.

Cutting height adjustments are made by raising the skirt to which the knives are bolted. Thus the only variation in operation which such a mower affords is the choice of cutting the crop close to the ground or very close to the ground. It is not practicable to use this type of mower to remove only the immature seed heads of for example, grasses, for which a cut at perhaps 300 mm above ground level would be required.

This invention provides a detachable blade assembly for a drum mower comprising blade means capable of both being fixed to the mower drum and extending beyond the mower skirt.

Preferably the assemblies are supplied in pairs or trios such that complete encirclement of the drum is achieved, the blade means extending radially to beyond the periphery of the skirt. It is convenient to use as the blade means a length of flat steel bar and sharpening that end most part of the bar which projects beyond the sweep of the mower skirt knives. This has the merit of cheapness and simplicity of construction.

When detachable knives are used then a blade carrier is necessary. This may be a disc which is modified by having a drum cut-out, enabling it to be fitted on the drum and retained by clamps or two half discs secured in the same way but it is easier to use bars of mild steel which lie dimetrically across the drum and extend to the sweep of the mower skirt or just inside the latter. Blades of carbon steel or alloy steel can then be used as bolt-on knives.

These embodiments of the invention are now described by way of example only with reference to the accompanying drawings in which:

Figure 1:    is a plan of half a blade assembly,

Figure 2:    is an end elevation of half a blade assembly,

Figure 3:    is a side elevation of a full assembly fitted to the drum of the drum mower, and

Figure 4:    is a side elevation of another full assembly embodiment fixed to the drum of a drum mower.

Figure 5:    is a side elevation of yet another full assembly fixed to the drum of a drum mower but with four blades.

Figure 6:    is a plan of an alternative half blade assembly.

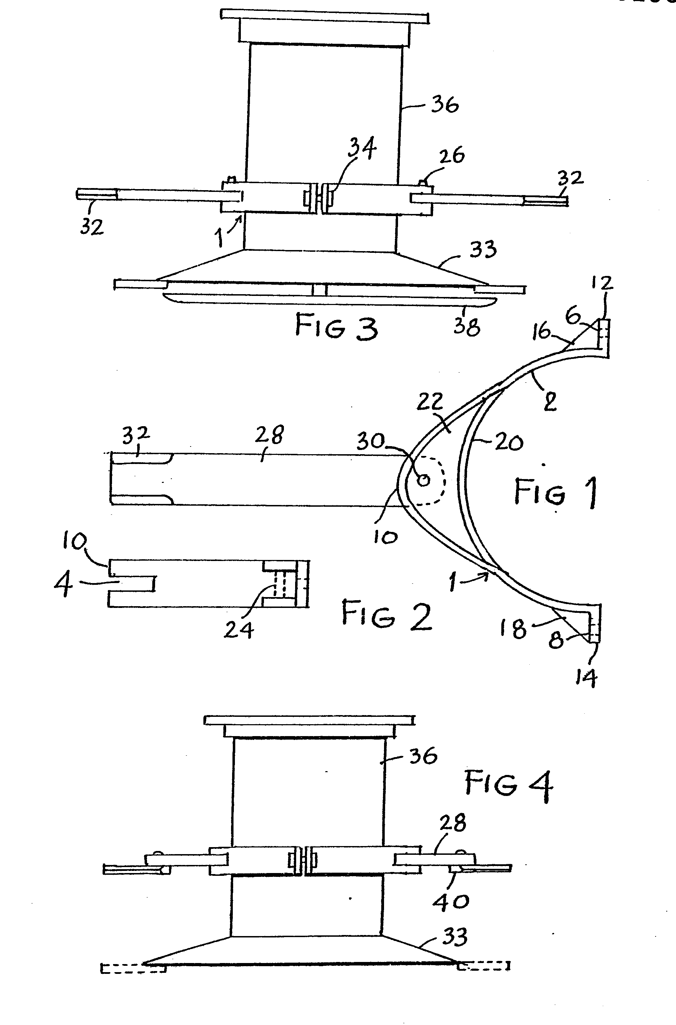

Referring now to figures 1 to 3, the bar holder 1 is made from a mild steel arch strap 2 is pierced to form a central bar-receiving slot 4. The wo ends are pierced with bolt holes 6, 8. The strap is formed into an arch with the peak 10 lying in the centre of the slot 4. The ends of the strap form outwardly turned lugs 12, 14. Each lug has one of the bolt holes 6, 8. The lugs are each braced by a pair of triangular gussets 16, 18.

The arch strap 2 is braced by an arcuate strap 20 which converts the arch to a semicircle. The arch is further braced by a pair of steel webs 22 welded to both the arch strap and the semi-circular strap. The webs each have an eye 24 which mutually register in order to receive a high tensile bolt 26. This fabricated part acts as the bar holder. The bar 28 has at one end a bore 30 which also receives the high tensile bolt. The opposite end is sharpened along a 100 mm end portion 32. The bolt allows the blades to pivot in the event of a collision with a fencepost or the like.

The bars are supplied in 350, 400 and 450mm lengths which allow the endmost sharpened 100mm to project beyond the knives of the skirt 33, by about 100mm. The blades must reach further than the skirt sweep because the skirt movement tends to bend the crop in the direction of mowing.

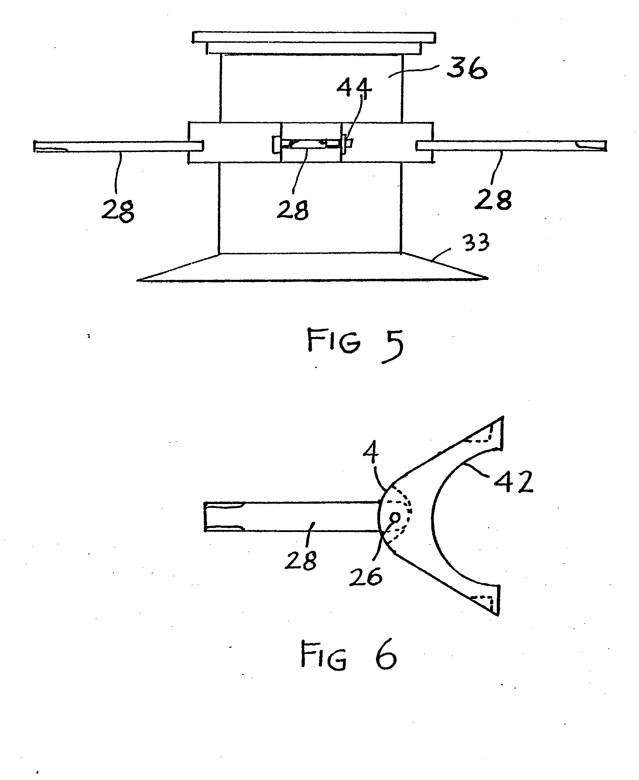

In figure 3 fasteners 34 clamp the assembly to the drum 36. The drum rides on skid 38.

In figure 4, the bars 28 perform no cutting but merely support bolt-on knives 40. The assemblies may therefore be left in position if desired and the knives 40 removed when double cutting is not required. More usually the arrangement of figure 1 is used and when multiple cutting is not required, the assembly is totally removed.

In use the operator can choose to leave the existing knives in position and bolt-on the assemblies to give a further cut say, half the height of the crop. In this way the crop stalks are cut at two heights. An extra ring of assemblies would cut the stalks at three heights simultaneously.

I have found the advantages of the above embodiments to be:

1.    Easy adjustability on the drum for different cutting heights.

2.    Multiple simultaneous cutting as possible leading to faster wilting, shorter silorating time, less shute blockage and easier feeding out.

3.    The crop is not laid in distinct swaths but is more generally distributed which promotes quicker drying and avoids wet lumps.

4.    When the skirt blades are removed, the assemblies permit accurate seed topping and thistle control without damaging pasture.

In Figure 5, the assemblies are modified to permit four bar holders 42 to be clamped by a pair of bolts 44 (one shown). Such that the bars lie mutually at 90°.

Referring now to Figure 6, the blade holder 1 is a one piece casting with a bar-receiving slot 4, a bar 28 and a bolt 26. This holder distributes the clamping forces over a large area of the drum because face 42 is large and mates exactly with the drum 36.

While most drum mowers have cylindrical drums one type has a drum which tapers from a wide base to a narrower top. The arcuate parts for such a machine are made for the zone of the drum most likely to be selected for blade attachment.

A series of bores are drilled in a helical path over this zone of the drum so that a grub screw can pass through the arcuate parts into the drum to fix the height of the blades. Sufficient adjustment of the fastener is provided to enable the arcuate parts to accommodate the changing diameter of the drum.

Another type has a drum of elliptical cross-section. For these the profile of the arcuate parts is modified accordingly.

It will be seen that the tendency of the skirt rotation to bend the crop out of the reach of the detachable blades required that the blades extend about 100mm further than the shirt knives. This means that the guards on some mowers must be modified to permit the extra reach.

In another non-illustrated embodiment the strap and webs fitting used to secure the blade to the drum is replaced by a single casting with a relatively large concave face for clamping to the drum and co-operation with two other like castings which together encircle the drum. The castings are joined by bolts just as in the illustrated embodiments. The purpose of the substitution is to spread the clamping pressure over a greater drum area because some makes are less able to withstand the pressure without deformation, than others.

# Claims :—

1.  A detachable blade assembly for a drum mower comprising blade means (1, 28, 40) adapted to be fixed to the mower drum (36) and extending beyond the mower skirt (33).

2.  A detachable blade assembly as claimed in claim 1 comprising a part (1) capable of engaging at least an arc of a mower drum wall (36), the remainder of the blade means (28, 40) in use extending from the part in a direction which is radially outward of the drum (36).

3.  A detachable blade assembly as claimed in claim 2 wherein the drum engaging part (1) cooperates with a like drum engaging part (1) such that the drum (36) is encircled and the parts are lockable on the drum.

4.  A detachable blade assembly as claimed in claim 2 wherein the drum engaging part (1) cooperates with two other like parts (1) such that the drum is encircled and each part has blade means (28, 40).

5.  A detachable blade assembly as claimed in claim 2 wherein the drum engaging part (1) co-operates with three other like parts (1) such that the drum is encircled and each part has blade means (28, 40).

6.  A detachable blade assembly as claimed in claim 1 wherein the blade means is a blade carrier (28) which extends at least part way to the sweep of the mower skirt and the blade proper is a detachable knife or knives (40).

7.  A detachable blade assembly as claimed in claim 6 wherein the blade carrier is a pair of bars (28) arranged to lie diametrically across the sweep of the mower skirt.

0202957

8.  A detachable blade assembly as claimed in claim 3 wherein the blade means is a pair of bars (28) each having an end most portion which both extends beyond the mower skirt and is sharpened to a cutting edge.

9.  A detachable blade assembly as claimed in claim 2 or 8 wherein the drum engaging parts (1) comprise a pair of arcuate members (2, 20) which mate with the drum, attachment means (34) at or near the ends of the arcuate members for joining one member to the other to complete the drum encirclement and a blade mounting part (4) located between the two ends such that a balanced assembly results.

10. A detachable blade assembly for a drum mower comprising a bar (28) with means (1) at one end adapted to fix the bar to the mower drum and knife means (40) at the opposite end.

020295

FIG 3

FIG 1

FIG 2

FIG 4

FIG 5

FIG 6

## European Patent Office

**EUROPEAN SEARCH REPORT**

EP 86 30 4007

| | DOCUMENTS CONSIDERED TO BE RELEVANT | | |
|---|---|---|---|
| Category | Citation of document with indication, where appropriate, of relevant passages | Relevant to claim | CLASSIFICATION OF THE APPLICATION (Int. Cl.4) |
| X | FR-A-2 001 453 (FAHR) <br><br> * Whole document * <br> --- | 1-3,7, 8 | A 01 D 34/66 |
| X | DE-A-1 582 249 (HAGEDORN) <br><br> * Page 4; claims 1-5 * | 1-3,9, 10 | |
| A | --- | 4-7 | |
| P,X | EP-A-0 146 364 (BANNAN) <br> * Page 4, line 22 - page 5, line 20; page 6, lines 17-24 * <br> --- | 1-3 | |
| A | AU-B- 520 139 (McLEOD ENGINEERING) <br><br><br> ----- | | TECHNICAL FIELDS SEARCHED (Int. Cl.4) <br><br> A 01 D |

The present search report has been drawn up for all claims

| Place of search | Date of completion of the search | Examiner |
|---|---|---|
| THE HAGUE | 21-08-1986 | DE LAMEILLIEURE D. |